Europäisches Patentamt

European Patent Office

Office européen des brevets

(11) Publication number: 0 142 733 A2

# (12) EUROPEAN PATENT APPLICATION

(21) Application number: 84112776.4

(22) Date of filing: 23.10.84

(51) Int. Cl.⁴: G 01 S 7/52
G 01 S 7/66

(30) Priority: 24.10.83 JP 197655/83

(43) Date of publication of application:
29.05.85 Bulletin 85/22

(84) Designated Contracting States:
DE FR GB

(71) Applicant: NISSAN MOTOR COMPANY, LIMITED
No.2, Takara-cho, Kanagawa-ku
Yokohama-shi Kanagawa-ken 221(JP)

(72) Inventor: Takeuchi, Kiyoshi
4470 Kamariya Kanazawa-ku
Yokohama-shi Kanagawa-ken(JP)

(72) Inventor: Kobayashi, Hiroshi
B412 4-15 Ooka Minami-ku
Yokohama-shi Kanagawa-ken(JP)

(72) Inventor: Obayashi, Hiroaki
3-68 Oppamahigashi-cho
Yokosuka-shi Kanagawa-ken(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Ultrasonic rangefinder.

(57) An ultrasonic rangefinder which measures distance to the ground by transmitting ultrasonic waves toward the ground and measuring the time which elapses until the reflected wave is received is shown. In order to reliably prevent erroneous measurement due to ultrasonic waves which travel to the receiver directly without striking the ground, the distance calculation is based on the time which elapses after transmission of the ultrasonic wave until the rate of change of the envelope of the received ultrasonic wave signal exceeds a prescribed value.

FIG. 5

EP 0 142 733 A2

NAME OF INVENTION

ULTRASONIC RANGEFINDER

BACKGROUND OF THE INVENTION

This invention relates to an ultrasonic rangefinder and more paticularly to an ultrasonic rengefinder in which ultrasonic waves are transmitted toward the ground and the time necessary for the reflected wave to return is used to estimate the distance to the ground.

Technologies for an ultrasonic rangefinder which transmits ultrasonic waves downward from a vehicle toward the ground, receives the reflected waves from the ground, and uses the time from transmission to reception to measure the distance to the ground, and for an ultrasonic speedmeter which uses the frequency shift between the frequency of the transmitted waves and the frequency of the received reflected waves to measure the speed of the vehicle relative to the ground, are shown in the prior art, for example, Utility Model Published Application Sho 57 - No. 68575.

In this kind of rangefinder there are at least two causes which produce spurious waves. One of them is an attenuation signal which is generated when the ultrasonic signal leaves a trace in the transmitter microphone or in the receiver microphone. The other is the signal which travels directly from the transmitter microphone to the receiver microphone. Since the latter spurious wave is always delayed by a fixed time with respect to the transmitted wave, its effect can be eliminated by determining that time and removing signals received within that time of the transmission of the transmitted wave. However, until now there has been a problem in that the attenuation signal in the transmitter microphone and the detour signal mentioned above leave traces in the receiver

- 2 -                                                    0142733

microphone which overlap with the desired reflected signal, causing undersirable side effects.

## SUMMARY OF THE INVENTION

An object of this invention is to provide an ultrasonic rangefinder in which erroneous measurement is not caused by such effects as the spurious detour signal.

Another object of this invention is to provide an ultrasonic rangefinder in which the desired reflected wave can be reliably distinguished from the spurious signal.

In order to accomplish the above ojbects, in this invention, in an ultrasonic rangefinder which measures the distance to the ground by transmitting ultrasonic waves toward the ground and measuring the time which elapses until the reflected waves are received, the distance calculation is based on the time from the transmission of the ultrasonic wave until the time at which the rate of change of the envelope of the waveform of the reflected wave exceeds a prescribed value.

## BRIEF DESCRIPTION OF THE DRAWINGS

Fig. 1 is a block diagram of a conventional type of ultrasonic rangefinder.

Figs. 2 (A) through 2 (F) show signal waveforms at various locations in the conventional ultrasonic rangefinder shown in Fig. 1.

Fig. 3 is a view showing the detouring of ultrasonic waves.

Figs. 4 (A) through 4 (D) are graphs showing signal wave-forms in a operation of an conventional ultrasonic rangefinder.

Fig. 5 is a block diagram of an embodiment of an ultrasonic rangefinder in accoralance with  the present invention.

Figs. 6 (A) through 6 (F) are graphs showing signal waveforms at various locations in the ultrasonic rangefinder shown in Fig. 5.

Figs. 7 (A) through 7 (E) are graphs showing waveforms which are used in explaining what can go wrong in an ultrasonic rangefinder.

Figs. 8 (A) through 8 (F) are graphs showing signal wavesforms in an operation of an ultrasonic rangefinder in accordance with the invention.

## DESCRIPTION OF THE PREFERRED EMBODIMENT

To facilitatge the understanding of the present invention, a brief reference will be made to a conventional rangefinder.

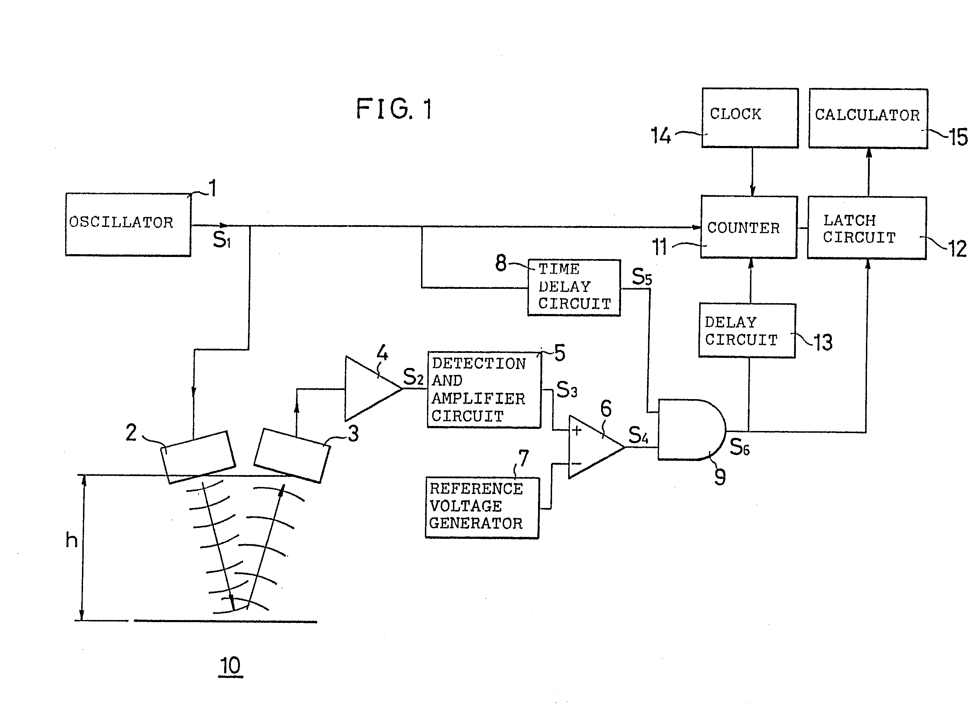

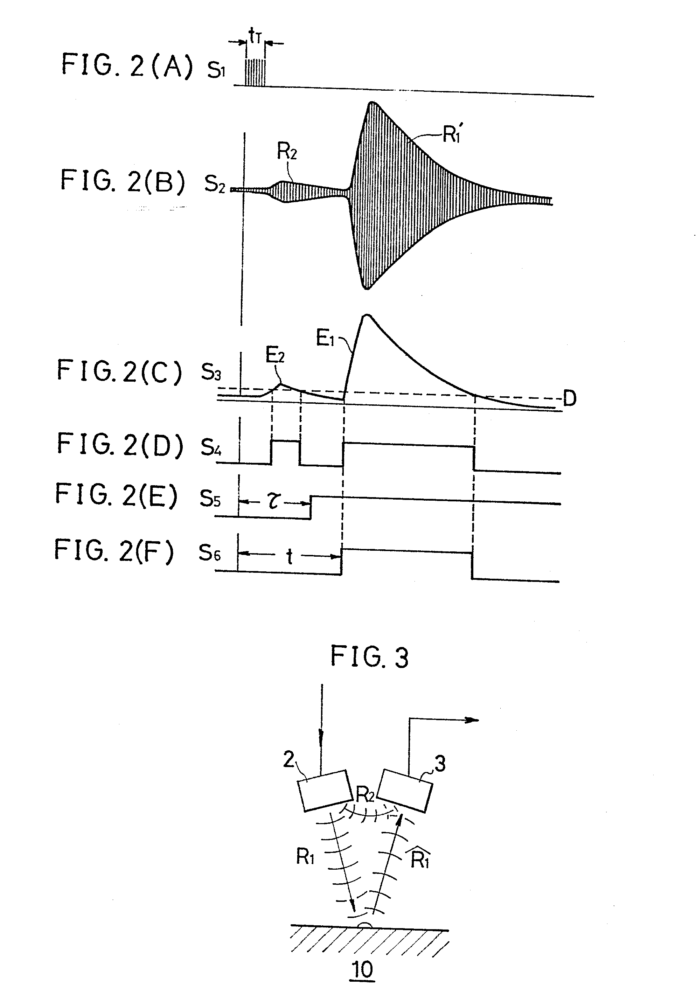

Fig. 1 shows an example of a conventional ultrasonic rangefinder of this type and signal waveforms at various locations in the conventional rangfinder are depicted in Figs. 2 (A) through 2 (F). An oscillator 1 generates a transmitted wave $S_1$ the freqauency of which matches the resonant frequency of the transmitter microphone 2 and the receiver microphone 3. The ultrasonic wave $R_1$ travels to the object of measurement 10 a distance h from the transmitter microphone 2 in a time $t_T$. The ultrasonic wave $\hat{R}_1$ which is reflected from the object of measurement 10, is received by the receiver microphone 3, converted to an electrical signal and input to the amplifier 4. The reflection signal $S_2$ which is amplified by the amplifier 4 enters the detection and smoothing circuit 5. Here the envelope signal $S_3$ shown in Fig. 2 (C) is obtained. This signal $S_3$ is compared with the reference voltage D generated by the reference voltage generator 7 in the comparator 6. When the level of the signal $S_3$ exceeds the reference voltage D the judgment signal $S_4$ is output. The envelope signal $S_3$ includes a part $E_1$ which is formed by the reflected wave $\hat{R}_1$ (referred to below as the "reflected output $E_1$"), and another part $E_2$ which is formed by the detour wave which enters the receiver microphone 3 directly from the transmitter microphone 2 (referred to below as the "detour output $E_2$").

Meanwhile, the AND circuit 9 forms the logical product of the mask signal $S_5$, which is caused to rise a time $\tau$ after the transmitted wave $S_1$ by the time delay circuit 8, and the judgment signal $S_4$, and outputs said logical product as the AND output signal $S_6$. The number of pulses from the clock 14, which starts upon transmission of the transmitted wave $S_1$, is output by the latch circuit 12 with the timing of the output $S_6$ from the AND circuit 9, that is, with the time width t. The time width t varies in response to the distance h since it is the arrival time of the reflected output $E_1$. The distance h can be calculated from the time width t on the basis of the period of the clock 14 and the speed of sound by the calculator 15. After latching the counter 11 is reset through the time delay circuit 13. The speed of sound in air is given by the following formula when the air temperature is T:

$$c = 331 + 0.607T \ (m/s)$$

The ultrasonic waves travel a distance 2h in the time t. Therefore the distance h can be found from the following formula:

$$h = ct/2 \ (m)$$

However, in the rangefinder, as shown in Fig. 3, while part of the ultrasonic wave transmitted from the transmitter microphone 2 toward the object of measurement 10 strikes the object 10 and is reflected as the ultrasonic wave $R_1$, which enters the receiver microphone 3, part does not reach the object 10 but detours directly from the transmitter microphone 2 to the receiver microphone 3 as the detour component $R_2$. This is because the transmitter microphone 2 and the receiver microphone 3 are not perfectly directional so that some transmitting and receiving are done even at $90^\circ$ to the intended direction of wave travel. Since the travel times of these two ultrasonic waves $R_1$, and $R_2$ are different from each other, as can be easily seen from Fig. 2 the detour output $E_2$ due to the detour wave $R_2$ appears at a different time than the refelction output $E_1$ due to the ultrasonic wave $R_1$, which is reflected from the object of measurement 10.

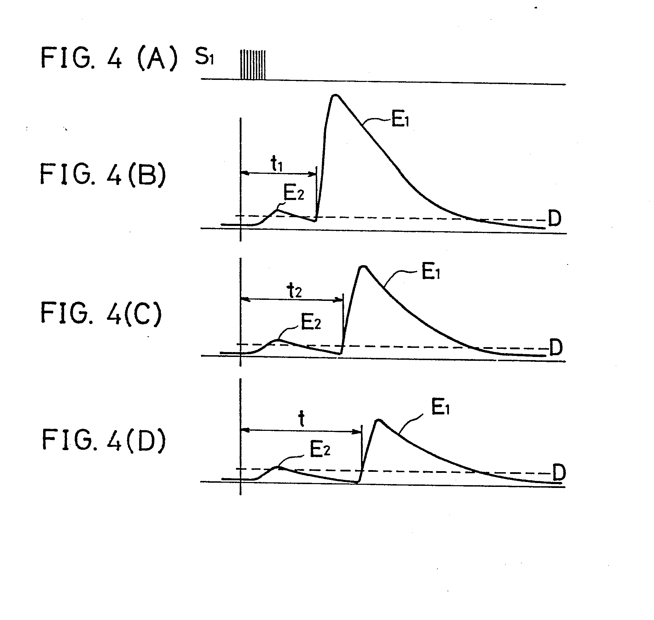

Moreover, since the travel path of the detour wave $R_2$ is always the same, the detour output $E_2$ always appears within a fixed time after the transmission of the transmitted wave $S_1$. For this reason, as is shown in Fig. 4, as the distance h gradually increases, in the envelope of the signal $S_3$ the time until the reflection output $E_1$ appears gradually increases, as shown by the times $t_1$, $t_2$, and $t_3$ in Fig. 4 (A), (B) and (C) respectively; but the time until the detour output $E_2$ appears does not vary. Since this detour output $E_2$ is not needed for a distance measurement, it is removed by the time delay circuit 8 and the AND circuit 9, and only the rise of the reflection output $E_1$ is detected. The time delay produced by this time delay circuit 8 is nearly determined by the travel time of the ultrasonic waves, but, since the frequency of the transmitted wave $S_1$ is made to resonate with the transmitter microphone 2 and the receiver microphone 3 in order to increase output, the signal $S_2$ does not rise as sharply as the transmitted wave $S_1$, and attenuation vibrations remain, leaving a trace.

The magnitude of these attenuation vibrations is determined by the sharpness Q of the resonance of the transmitter microphone 2 and the receiver microphone 3 and changes very little. For this reeason the time delay $\tau$ is set to a value which leaves plenty of leeway for the detour output $E_2$ due to these attenuation vibrations to become much smaller than the reference voltage D. However, since the Q of the transmitter microphone and the receiver microphone is set to a large value in this type of ultrasonic rangefinder, the attenuation vibration of the received signal are slso large, so that the overlap between the detour output $E_2$ and the reflection output $E_1$ becomes large and the rise of the reflection output $E_1$ becomes difficult to detect. Occasionally the detour output $E_2$ is mistaken for the reflection output $E_1$ giving an erroneous distance measurement.

Now the present invention will be described with reference to the drawings.

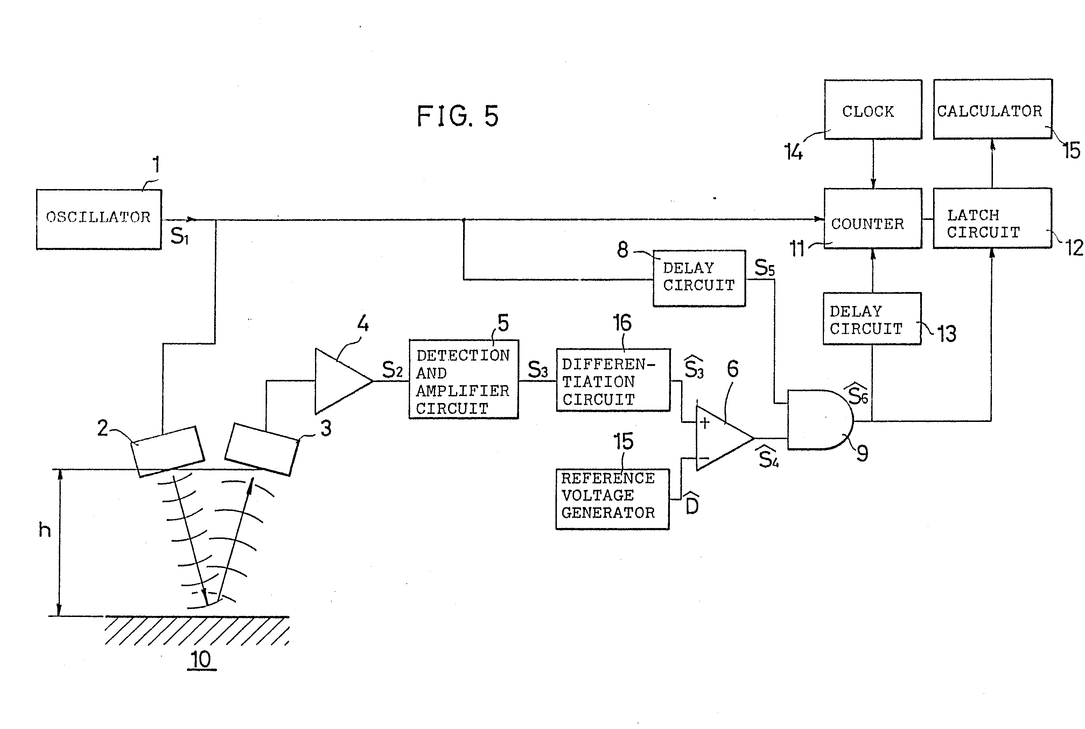

Fig. 5 shows an embodiment of a rangefinder in which this invention is applied. The embodiment has a differentiation circuit 16 which differentiate the envlope E which is output from the detection and amplifier circuit 5 of the rangefinder shown in Fig. 1. The output $S_3$, of the differentiation circuit 16 is compared with the reference voltage D from the reference voltage generator 15 in the comparator 6. Other circuit components are the same as in Fig. 1.

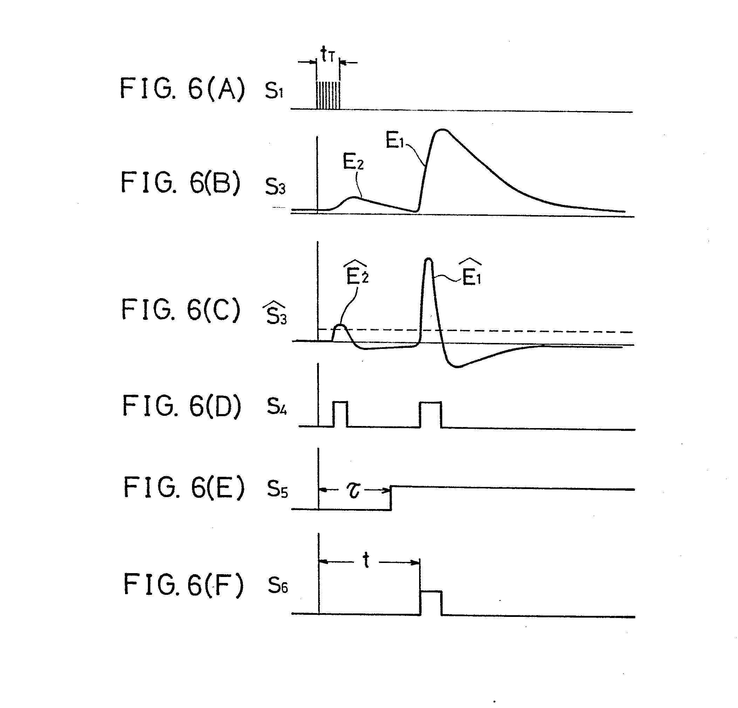

Figs. 6 (A) through 6 (F) show the signal waveforms at various locations in the circuitry of the rangefinder shown in Figs. 5. Those signals which are the same as in Fig. 1 and Fig. 2 are shown with the same symbols. The signal $\hat{S}_3$ in Fig. 6 (C) is obtained by differentiating the envelope of the signal $S_3$ which is output from the detector and amplifier circuit 5. This signal $\hat{S}_3$ is compared with the reference voltage $\hat{D}$ from the reference voltage generator 15 in the comparator 6, which outputs the judgment signal $\hat{S}_4$ shown in Fig. 6 (D). After that the judgment is performed in the same manner as in the conventional type of rangefinder shown in Fig. 1 (refere to Fig. 6 (E) and (F) ).

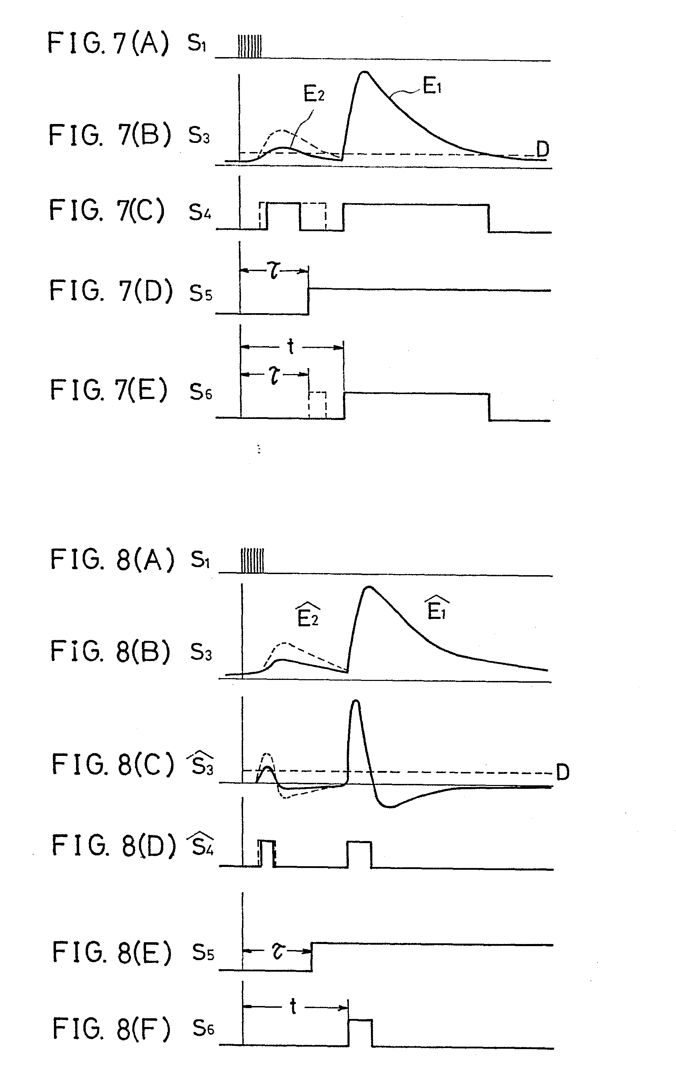

This solves the problem of erroneous measurement due to the detour output $E_2$. How it does so will now be explained with reference to Figs. 7 and Figs. 8. Figs. 7 (A) through 7 (E) show signal waveforms in the existing type of rangefinder while Figs. 8 (A) through 8 (F) show signal waveforms in a rangefinder in accordance with this invention.

The detour output $E_2$ arising from the detour ultrasonic wave $R_2$ from the transmitter microphone 2 to the receiver microphone 34 is determined by the directionality of the microphone. This directionality in turn is greatly affected by the physical shape of the microphone. When this rangefinder is used as a vehicle height sensor, if mud gets on the microphone during operation it is essentially the same as a change in the shape of the microphone and the detour output can increase. Supposing that the detour wave $R_2$ increases, the detour output $E_2$ increases from the solid line to the dotted line in Fig. 7 (B). At this time the attenuation vibrations of the microphone are large, so that the time interval during which the detour output $E_2$ is larger than the reference voltage D becomes longer, and, as a result, the judgment signal $S_3$ becomes longer, as shown by the dotted line in Fig. 7 (C). This causes the judgment signal $S_4$ to persist beyond the time delay $\tau$ so that the output of the AND circuit 9 does not have the normal time delay t but rather has the same time width as the time delay $\tau$ of the mask signal $S_5$, causing erroneous distance measurement.

In contrast, in the present invention, as shown in Figs. 8, even if the detour output $\hat{E}_2$ increases causing the attenuation vibrations to increase, the attenuation vibrations do not appear in the differentiated output E so that there is little if any change in the time width of the judgment signal $\hat{S}_4$ so that the output $\hat{S}_6$ of the AND circuit 9 has the correct time width t. The reference voltage $\hat{D}$ can be as small as 0, in fact, this gives the least error.

In the embodiment described above the envelope of the reflected wave is differentiated and the derivative is detected as a means of accurately detecting the reflection output, it is also possible to achieve the same objective by differentiating the differentiated output once more to obtain the second derivative and then detecting the second derivatived.

It should be understood, of course, that the foregoing relates only to preferred embodiments of the present invention and that numerous modifications or alterations may be made therein without departing from the spirit and scope of the invention as set forth in the appended claims.

0142733

What is Claimed is:

1. A ultrasonic rangefinder comprising:

an oscilator (1) generating a series of pulse signals $(S_1)$;

a transmitter microphone (2) which emits ultrasonic pulses toward a target object (10) on the basis of the pulse signals transmitted from said oscillator (1);

a receiver microphone (3) which receives ultrasonic pulses reflected from said target object (10);

a means (14) for differentiating by time the envelope of the output signals $(S_2)$ of said receiver microphone (3)

a means for detecting (6,7) the rise of the signal corresponding to the refrected pulse on the basis of the output signal $(\hat{S}_3)$ of said differentiating means (16);

a means for calculating a distance between said rangefinder and the object (10) on the basis of a delay time of the rise detected by said detecting means in relation to the pulse signal $(S_1)$ from said oscillator (1)

2. An ultrasonic rangefinder of claim 1 further comprising a means (8, 9) for eliminating the signals corresponding to the output $(S_2)$ from said receiver microphone (3) during a prescribed period $(\tau)$ after an emission of pulse from said transmitter microphone (3).

3. An ultrasonic rangefinder of claim2, wherein said detecting means comprises:

a reference voltage generator (7) and

a comparator (6) receiving the output signal from said differentiating means (16) and the output from said generator and allowing the output signal from said differentiating means to enter said calculating means.

4. An ultrasonic rangefinder of claim 3 wherein, said eliminating means comprises:

a time delay circuit (8) receiving the pulse singnal $(S_1)$ from said oscillator (1) and outputting a mask signal $(S_5)$ which starts with the delay time $(\tau)$ of said

prescribed period after the pulse signal ($S_1$) from said oscillator (1)

an AND circuit receiving the output of said delay circuit (8) and the output of said comparator (6)

5. An ultrasonic rangefinder of claim 4 further comprising:

a clock (14);

a counter (11) which starts its counting when it receives the pulse signal ($S_1$) from said oscillator (1);

a latch circuit (12) which receives the output of said counter (11) and the output ($\hat{S}_6$) of said AND circuit (9) and outputs the output of said counter when the output ($\hat{S}_6$) of said AND circuit (9) is received;

a time delay circuit which allows the output ($\hat{S}_6$) of said AND circuit (9) to enter said counter (11) with delay time to reset said counter.

6. An ultrasonic rangefinder of claim 1 wherein; said envelope is differentiated for one time

7. An ultrasonic rangefinder of claim 1 wherein; said envelope is differentiated for multi-times

# FIG. 1

FIG. 2(A) $S_1$   $t_T$

FIG. 2(B) $S_2$   $R_2$   $R_1'$

FIG. 2(C) $S_3$   $E_2$   $E_1$   D

FIG. 2(D) $S_4$

FIG. 2(E) $S_5$   $\tau$

FIG. 2(F) $S_6$   $t$

FIG. 3

2   $R_2$   3

$R_1$   $\widehat{R_1}$

10

FIG. 4 (A) $S_1$

FIG. 4 (B)

FIG. 4 (C)

FIG. 4 (D)

FIG. 5

014.2733

FIG. 6(A)  $S_1$  $t_T$

FIG. 6(B)  $S_3$  $E_2$  $E_1$

FIG. 6(C)  $\widehat{S_3}$  $\widehat{E_2}$  $\widehat{E_1}$

FIG. 6(D)  $S_4$

FIG. 6(E)  $S_5$  $\tau$

FIG. 6(F)  $S_6$  $t$

6/6

0142733

FIG. 7(A)  S₁

FIG. 7(B)  S₃

E₂   E₁   D

FIG. 7(C)  S₄

FIG. 7(D)  S₅   τ

FIG. 7(E)  S₆   t   τ

FIG. 8(A)  S₁

FIG. 8(B)  S₃   $\widehat{E_2}$   $\widehat{E_1}$

FIG. 8(C)  $\widehat{S_3}$   D

FIG. 8(D)  $\widehat{S_4}$

FIG. 8(E)  S₅   τ

FIG. 8(F)  S₆   t